# EUROPÄISCHE PATENTANMELDUNG

(11) **EP 3 357 989 A1**
(43) Veröffentlichungstag der Anmeldung: **08.08.2018**
(21) Anmeldenummer: 18153588.1
(22) Anmeldetag: 26.01.2018
(51) Int. Cl.: C09J 7/40, C09J 7/38, A47G 27/02, A47G 27/04

(54) **VERFAHREN ZUR HERSTELLUNG EINES TEMPORÄR FESTHAFTENDEN TEPPICHS**

(30) Priorität: 02.02.2017 AT 500792017
(71) Anmelder: ITD Vertriebsgesellschaft m.b.H., 2542 Kottingbrunn (AT)
(72) Erfinder: Dlouhy, Thomas, 2542 Kottingbrunn (AT)
(74) Vertreter: Patentanwaltskanzlei Matschnig & Forsthuber OG

(57) **Zusammenfassung**

gekennzeichnet durch folgende Schritte:
a) Anordnen von doppelseitigem Klebeband (2) in Form durchgehender Streifen an beiden Längskanten auf der Unterseite (1a) eines vorproduzierten Teppichs (1), wobei auf der dem Teppich (1) abgewandten Seite des doppelseitigen Klebebandes (2) eine zumindest in die Länge dehnbare, abziehbare Abdeckfolie (2a) angeordnet ist, wobei die überstehende Breite (2a') der Abdeckfolie (2a) in Richtung der jeweiligen Längskante des Teppichs (1) vorsteht, und wobei das doppelseitige Klebeband (2) auf einer Seite eine von der anderen Seite unterschiedliche Klebekraft aufweist, wobei die stärker klebende Seite auf die Unterseite (1a) des Teppichs (1) geklebt wird,
b) Schneiden des Teppichs (1) in eine vorgegebene Länge, und
c) Aufrollen des Teppichs (1) zu einer kompakten Rolle (1') mit der Unterseite (1a) nach außen, wobei der Teppich (1) ohne ein Ablösen des doppelseitigen Klebebands (2) oder der Abdeckfolie (2a) zusammengerollt wird.

## Beschreibung

Die Erfindung betrifft ein Verfahren zur Herstellung eines temporär festhaftenden Teppichs zum Auslegen auf einem Gebäudeboden und ein Verfahren zum Auslegen des erzeugten Teppichs.

Auf Messen oder ähnlichen Veranstaltungen ist es üblich in den dazu vorgesehenen Räumlichkeiten Teppichbahnen zu verlegen, um den Besuchern dieser Veranstaltungen vorgegebene und sicher begehbare Wege auf den üblicherweise rutschigen Gebäudeboden anzubieten.

Hierbei ist es von besonderer Wichtigkeit, dass diese Teppichbahnen nicht einfach ausgerollt liegen gelassen werden, sondern durch etwaige Scher- und Zugspannungen oder ähnlich auftretende Belastungen, die unter anderem durch Besucher entstehen können, in seiner Position fixiert bleibt, und nicht verrutscht oder aufwölbt.

Üblicherweise geschieht dies mit doppelseitigen Klebebändern, welche in parallelen Bahnen zuerst auf den Gebäudeboden ausgelegt und von einer Seite mit dem Boden verklebt werden. Nachfolgend wird ein Teppichstreifen über diese Klebebänder ausgerollt und über die Länge gespannt, wobei anschließend eine auf den Klebebändern angeordnete Abdeckfolie, üblicherweise aus Papier, abgezogen wird und der Teppich mit den Klebebändern verklebt wird.

Da die Abdeckfolie aus Papier in der Regel keine elastische Längenänderung zulässt und der Teppich beim Spannen über seine Länge eine Längenänderung von bis zu ein Prozent erfährt, muss für jede angeordnete Klebebandlänge auf dem Gebäudeboden die auftretende Längenänderung des Teppichs mitberücksichtigt werden.

Deshalb ist es eine Aufgabe der Erfindung ein Verfahren bereitzustellen, um oben erwähnte Nachteile und andere Einschränkungen des Standes der Technik zu vermeiden.

Diese Aufgabe wird mit einem eingangs erwähnten Verfahren erfindungsgemäß durch die folgenden Schritte gelöst:
a) Anordnen von doppelseitigem Klebeband in Form durchgehender Streifen an beiden Längskanten auf der Unterseite eines vorproduzierten Teppichs, wobei die doppelseitigen Klebebänder parallel an den Längskanten des Teppichs angeordnet werden, und wobei auf der dem Teppich abgewandten Seite des doppelseitigen Klebebandes eine zumindest in die Länge dehnbare, abziehbare Abdeckfolie angeordnet ist, welche eine größere Breite als das doppelseitige Klebeband aufweist, wobei die überstehende Breite der Abdeckfolie in Richtung der jeweiligen Längskante des Teppichs vorsteht, und wobei das doppelseitige Klebeband auf einer Seite eine von der anderen Seite unterschiedliche Klebekraft aufweist, wobei die stärker klebende Seite auf die Unterseite des Teppichs geklebt wird,
b) Schneiden des Teppichs in eine vorgegebene Länge,
c) Aufrollen des Teppichs zu einer kompakten Rolle mit der Unterseite nach außen, wobei der Teppich ohne ein Ablösen des doppelseitigen Klebebands oder der Abdeckfolie, beispielsweise Wellenbildung, zusammengerollt wird.

Bei einer konkreten Ausführungsform ist das doppelseitige Klebeband auf dem jeweils beklebten Boden im Wesentlichen rückstandsfrei entfernbar.

Bei einer vorteilhaften Weiterbildung ist das doppelseitige Klebeband auf der beklebten Unterseite des Teppichs im Wesentlichen rückstandsfrei entfernbar.

Zur Lösung der genannten Aufgabe kann weiters ein Verfahren zum Auslegen eines Teppichs der oben genannten Art herangezogen werden, bei welchem erfindungsgemäß folgende Schritte durchgeführt werden:
a) Fixieren eines ersten Endes des Teppichs mit einem Gebäudeboden mit Hilfe eines Verlegebandes,
b) Aufbringen einer Zugkraft an dem nicht fixierten Ende des Teppichs und dessen Spannen über seine Länge,
c) Fixieren des zweiten Endes des Teppichs auf dem Boden mit Hilfe des Verlegebandes,
d) Ergreifen der überstehenden Breite der Abdeckfolie und Abziehen der Abdeckfolie zwischen Boden und Unterseite des Teppichs,
e) temporäres Verhaften der Teppichbereiche an dem die doppelseitigen Klebebänder an der Unterseite des Teppichs angeordnet sind durch Anpressen an den Boden.

Die Erfindung wird anhand von nachfolgenden Zeichnungen näher erläutert. Hierbei zeigen:
Fig. 1 eine erfindungsgemäße Ausführung eines Teppichs ohne einer Abdeckfolie auf den doppelseitigen Klebebändern,
Fig. 2 die Ausführung von Fig. 1 mit angeordneten Abdeckfolien,
Fig. 3 eine Detailansicht von Schnitt III-III aus Fig. 2,
Fig. 4 der erfindungsgemäße Teppich in Form einer kompakten Rolle aufgerollt,
Fig. 5 eine Schrägansicht des in die Länge gespannten Teppichs und Fixierung mit Hilfe eines Verlegebandes,
Fig. 6 eine Detailansicht von Schnitt VI-VI aus Fig. 5,
Fig. 7 eine Schrägansicht eines Beispiels einer Vorrichtung zur Herstellung eines Teppichs,
Fig. 8 eine Seitenansicht eines Klebeband-Zuführelements mit einem Sensormittel,
Fig. 9 eine Ansicht von unten eines Moduls einer Auflageplatte mit Klebeband-Zuführelement und dargestellten Verschiebeeinheit,
Fig. 10, 11 und 12 eine Draufsicht des in Fig. 8 gezeigten Klebeband-Zuführelements mit jeweils einer unterschiedlichen Position einer eingezeichneten Teppichkante, und

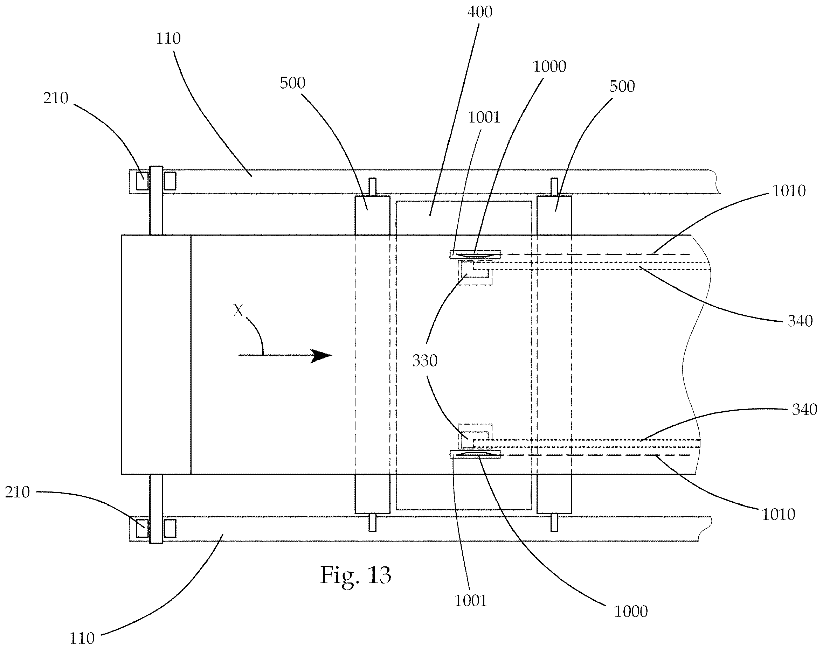

Fig. 13 eine Draufsicht einer alternativen Ausführungsform.

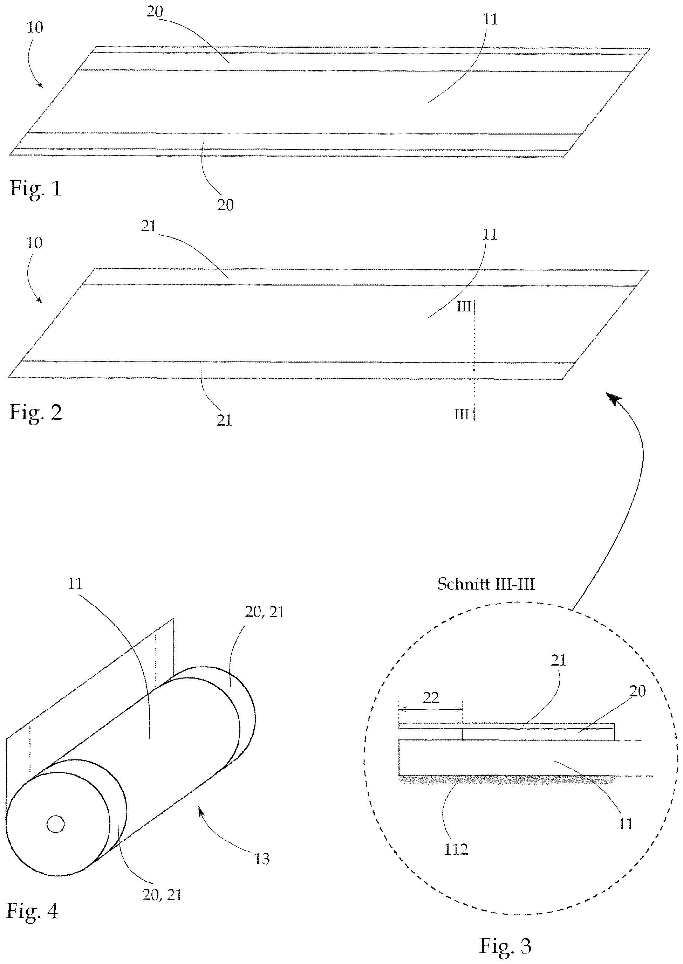

In **Fig. 1** und **Fig. 2** ist ein Ausführungsbeispiel des hergestellten Teppichs **10** mit der begehbaren Oberseite **12** nach unten und mit der nicht begehbaren Unterseite **11** nach oben abgebildet, wobei doppelseitige Klebebänder **20** in durchgehender Streifenform parallel an beiden Längskanten angeordnet sind. Zur Herstellung eines erfindungsgemäßen Teppichs wird ein für Messe- bzw. Veranstaltungsgebäude üblicher Teppich, beispielsweise Nadelfilzteppich, verwendet.

Bei der in **Fig. 1** dargestellten Form sind die Klebebänder **20** mit einem Abstand zu den Längskanten angeordnet, wobei ein Anordnen der doppelseitigen Klebebänder **20** bündig mit den Längskanten ebenso möglich ist.

Im Unterschied zu **Fig. 1** sind in **Fig. 2** auf den Klebebändern **20** jeweils elastische, abziehbare Abdeckfolien **21** angeordnet, beispielsweise aus Polypropylen, welche jeweils eine größere Breite als die doppelseitigen Klebebänder **2** aufweisen, wobei diese überstehende Breite **22** der Abdeckfolie **21** in Richtung der jeweiligen Längskante des Teppichs **10** vorsteht.

**Fig. 3** zeigt eine Detailansicht eines Schnittes III-III aus **Fig. 2****,** wobei die später begehbare Oberseite 12 des Teppichs nach unten und die nicht begehbare Unterseite nach oben gerichtet ist. Die Kante der überstehenden Breite **22** der Abdeckfolie **21** schließt mit der jeweiligen Längskante des Teppichs **10** ab, wobei in einem anderen Beispiel ein Überstehen möglich ist.

Die doppelseitigen Klebebänder **20** weisen auf einer Seite eine von der anderen Seite unterschiedliche Klebekraft auf, wobei die stärker klebende Seite auf der Unterseite **11** des Teppichs **10** geklebt wird. Unter einer stärker bzw. schwächer klebenden Seite wird im Zusammenhang mit der vorliegenden Erfindung verstanden, dass durch ein späteres Ablösen des erfindungsgemäßen Teppichs **10** von einem Gebäudeboden die Klebewirkung des doppelseitigen Klebebandes **20** auf die Unterseite **11** des Teppichs **10** beibehalten wird.

Nach dem Anordnen der doppelseitigen Klebebänder **20** wird der Teppich **11** in eine vorgegebene Länge geschnitten und in eine kompakte Rolle **13** zusammengerollt, wie in **Fig. 4** dargestellt, um ein nachfolgendes Transportieren und/oder Schlichten des Teppichs **10** zu ermöglichen, wobei der Teppich **10** mit der Unterseite **11** des Teppichs **10** nach außen hin aufgerollt wird. Für das Zusammenrollen des Teppichs **10** ist die Elastizität der Abdeckfolie **20** von Bedeutung, da durch das Zusammenrollen eine Längenänderung der angeordneten Klebebänder **20** verursacht wird. In einer Ausführungsform wird aus diesem Grund Polypropylen als Werkstoff für die Abdeckfolie verwendet, wobei andere Materialien, die ähnliche elastische Eigenschaften besitzen, möglich sind.

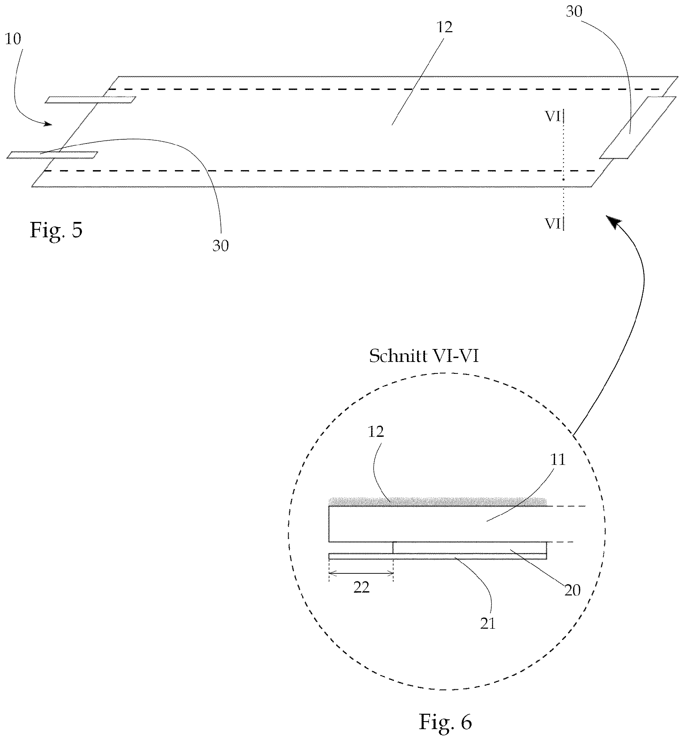

Zum Auslegen des Teppichs **10** wird die kompakte Rolle **13** auf einer gewünschten Stelle des Gebäudebodens platziert und ausgerollt, wobei die Unterseite **11** des Teppichs **10** bodenseitig angeordnet wird, wie in **Fig. 5** und in einer Detailansicht **Fig. 6** von Schnitt VI-VI aus **Fig. 5** illustriert. Anschließend wird ein erstes Ende des Teppichs **10** an dem Gebäudeboden mit Hilfe eines Verlegebandes **30** fixiert und mit Aufbringen einer Zugkraft an dem nicht fixierten zweiten Ende über seine Länge gespannt. Dies kann im einfachsten Fall händisch, durch Erfassen des zweiten Endes des Teppichs **10** und Anziehen erfolgen. Dabei kann der Teppich **10** beispielsweise bis zu einem Prozent seiner ursprünglichen Länge gedehnt werden, wobei das doppelseitige Klebeband **20** und die darauf angeordnete Abdeckfolie **21** ebenfalls um die gleiche Länge gedehnt bzw. gestreckt werden. Aus diesem Grund ist das verwendete Material des Klebebands **20** und der zugehörigen Abdeckfolie **21** in die Länge dehnbar und/oder elastisch ausgebildet.

Danach wird das zweite Ende mit dem Verlegeband **30** fixiert, wie in **Fig. 5** dargestellt. In **Fig. 5** sind das erste und das zweite Ende auf unterschiedliche Arten mit dem Gebäudeboden mit Hilfe des Verlegebandes **30** fixiert, wobei andere Möglichkeiten das Verlegeband **30** anzuordnen denkbar sind.

Nach dem Ergreifen der überstehenden Breite **22** der Abdeckfolie **21** und anschließendes Abziehen der Abdeckfolie **21,** kann ein temporäres Verhaften der Teppichbereiche an dem die doppelseitigen Klebebänder **20** an der Unterseite **11** des Teppichs **10** angeordnet sind durch Anpressen an den Boden erzielt werden.

Für den Abbau des Teppichs **10** wird der Teppich von dem jeweiligen Gebäudeboden abgezogen, wobei die auf dem Gebäudeboden geklebte Seite des doppelseitigen Klebebands **20** im Wesentlichen rückstandsfrei von dem Gebäudeboden abgelöst werden kann, und wobei die auf der Unterseite **11** des Teppichs **10** geklebte Seite des doppelseitigen Klebebands **20** während des Ablösevorgangs des Teppichs **10** von dem Gebäudeboden die Klebewirkung auf die Unterseite **11** des Teppichs **10** beibehält.

Nachfolgend kann das doppelseitige Klebeband **20** von der Unterseite **11** des Teppichs **10** im Wesentlichen rückstandsfrei abgelöst bzw. entfernt werden.

Nachfolgend wird eine beispielhafte Vorrichtung zur Herstellung eines temporär festhaftenden Teppichs auf der das erfindungsgemäße Verfahren angewendet wird, beschrieben.

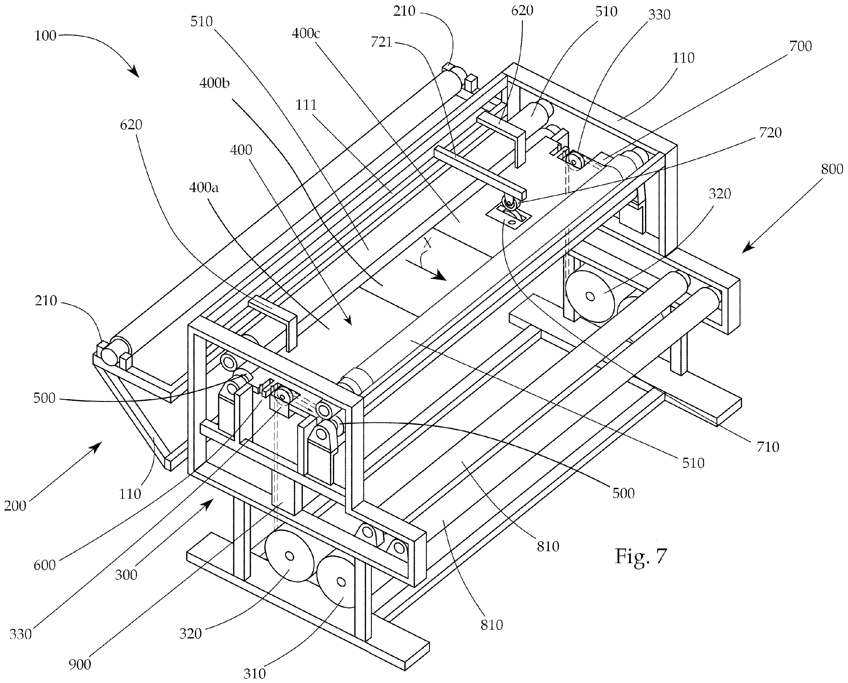

Das in **Fig. 7** gezeigte Ausführungsbeispiel lässt sich in einen Zuführabschnitt **200,** einen Bearbeitungsabschnitt **300** und einen Aufrollabschnitt **800** unterteilen, welche allesamt auf einem Tragerahmen **110** angeordnet sind, wobei die Ausführungsform in **Fig. 7** mit einem an dem Tragerahmen **110** angeordneten Motor **900** betrieben wird, welcher als Gleichstrommotor in einer 24 Volt-Variante ausgebildet ist.

Der Zuführabschnitt **200** umfasst Halterungselemente **210,** welche zur Aufhängung einer Teppichrolle, beispielsweise an einer Stange aufgerollten Teppichrolle, ausgebildet sind, beispielsweise Stangen, auf der Teppichbahnen aufgerollt sind, die üblicherweise auf Gebäudeboden, beispielsweise Messehallen, verlegt werden, bevor diese ausgerollt oder unterschiedlichen Bearbeitungsschritten unterzogen werden, um unter anderem Transportvorgänge zu erleichtern.

Ebenso erleichtern die Halterungselemente **210** ein späteres Einspannen des Teppichs in die beispielhafte Vorrichtung, da dieser, wenn er durch die Vorrichtung von der Stange gerollt wird, die Stange in der Position, welche die Halterungselemente **210** vorgeben, verbleibt.

Der Bearbeitungsabschnitt **300** umfasst in dem in **Fig. 7** gezeigten Beispiel zwei Klebebandrollen **310,** wobei Klebeband, vorzugsweise doppelseitiges Klebeband, von einer Klebebandrolle **310** in ein der jeweiligen Klebebandrolle **310** zugeordneten Klebeband-Zuführelement **330** zugeführt wird.

In direkter Umgebung zu je einer Klebebandrolle **310** ist eine der jeweiligen Klebebandrolle **310** zugeordnete Umlenkrolle **320** angeordnet, welche dazu geeignet ist, dass das Klebeband von der jeweiligen Klebebandrolle **310** ordnungsgemäß in das Klebeband-Zuführelement **330** zu führen.

Die Klebeband-Zuführelemente **330** sind auf den parallel zur Teppichzuführrichtung **X** gelegenen Außenkanten einer Auflageplatte **400,** vorzugsweise in Ausnehmungen der Auflageplatte **400,** derart angeordnet, dass die Klebebänder, vorzugsweise doppelseitiges Klebeband, in Form von durchgehenden Streifen im Wesentlichen parallel an den Längskanten auf die Unterseite des Teppichs geklebt werden.

Da wie zuvor in der Einleitungsbeschreibung erwähnt, die Teppichbreite eines zuvor aufgerollten Teppichs variiert, ist jedem Klebeband-Zuführelement **330** des in **Fig. 7** gezeigten Beispiels ein Sensormittel **600** zum Detektieren des Abstandes zwischen Teppichkante und zugeführtem Klebeband zugeordnet, wobei die Sensormittel **600** je mit einer unter der Auflageplatte **400** angeordneten Verschiebeeinheit **610** verbunden ist, welches in **Fig. 3** schematisch gezeigt ist, sodass bei einer variierenden Breite des über die Auflageplatte **400** laufenden Teppichs die Klebeband-Zuführeinheit **330** mitsamt dem zugeordneten Sensormittel **600** derart verschoben wird, dass ein zuvor eingestellter Abstand zwischen Teppichkante und Klebeband-Zuführelement **330** beibehalten wird.

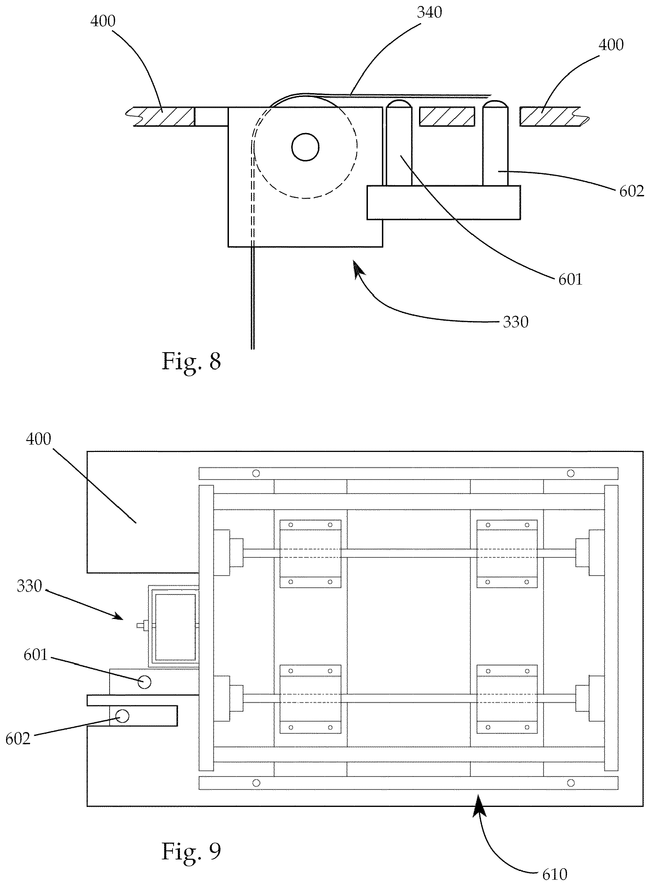

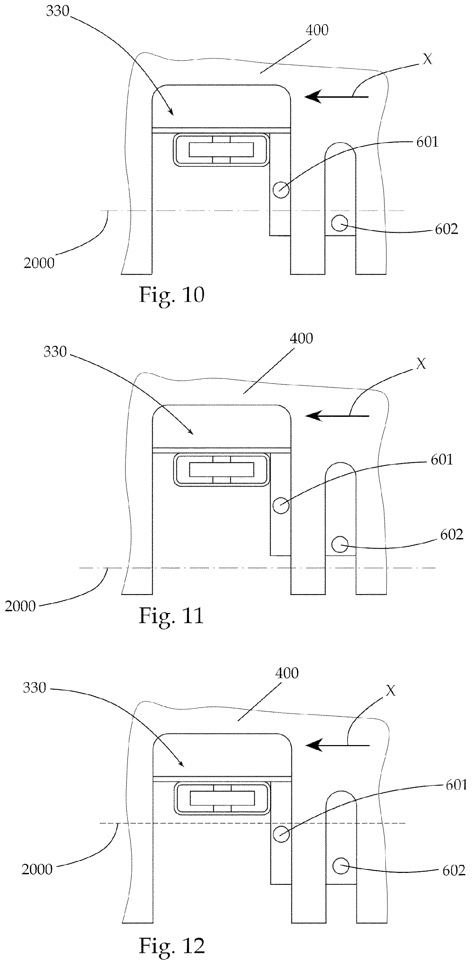

Hierbei zeigt **Fig. 8** eine Seitenansicht und **Fig. 10,11** und **12** eine Detailansicht von oben eines Klebeband-Zuführelements **330** mit einem Sensormittel **600,** welches in dieser Ausführungsform einen ersten und zweiten optischen, lichtsensitiven Sensor **601, 602** umfasst, wobei der einstellbare und anschließend fixierbare Abstand der Sensoren **601, 602** bzw. der Sensorenanordnung zu dem jeweiligen Klebeband-Zuführelement **330** bestimmt, in welchem Abstand das Klebeband zur darüber laufenden Teppichkante zugeführt werden soll.

Die Sensoren **601, 602** sind derart angeordnet, dass diese in Teppichzuführrichtung **X** nicht fluchten, sondern versetzt angeordnet sind, wobei keine Verschiebung des Klebeband-Zuführelements **330** durchgeführt wird, wenn der erste Sensor **601** bündig von einem darüber laufenden Teppich bzw. der Teppichkante **2000** verdeckt wird, und der zweite Sensor **602** an der Teppichkante **2000** anschließt und nicht verdeckt wird, wie in **Fig. 10** dargestellt.

Sollte die Teppichbreite dermaßen variieren, dass auch der zweite Sensor **602** von dem Teppich verdeckt wird, wie in **Fig. 11** dargestellt, so wird das Klebeband-Zuführelement **330** gemeinsam mit den Sensoren **601, 602** bzw. der Sensoranordnung orthogonal zur Teppichzuführrichtung **X** dermaßen bewegt, sodass, wie bereits oben erwähnt, der erste Sensor **601** von dem Teppich bzw. der Teppichkante **2000** vollständig verdeckt und der zweite Sensor **602** nicht verdeckt wird.

Sollte die Teppichbreite dermaßen variieren, dass auch der erste Sensor **601** von dem Teppich nicht mehr verdeckt wird, wie in **Fig. 6** gezeigt, so wird das Klebeband-Zuführelement **330** gemeinsam mit den Sensoren **601, 602** bzw. der Sensoranordnung orthogonal zur Teppichzuführrichtung **X** derart bewegt, sodass, wie bereits oben erwähnt, der erste Sensor **601** von dem Teppich bzw. der Teppichkante **2000** vollständig verdeckt und der zweite Sensor **602** nicht verdeckt wird.

Wie in **Fig. 7****,****10,11** und **12** gezeigt, sind die Sensormittel **600** in Richtung Teppichzuführrichtung **X** jeweils vor den Klebeband-Zuführelementen **330** angeordnet, da sinnvoll ist eine variierende Teppichbreite auszugleichen, bevor das Klebeband, vorzugsweise doppelseitiges Klebeband, auf den Teppich geklebt wird.

Der Bearbeitungsabschnitt **300** umfasst weiters eine an jeder im Wesentlichen normal bzw. orthogonal zur Teppichzuführrichtung **X** liegenden Außenkante der Auflageplatte **400** angeordnete Teppich-Führungsrolle **500** mit einer in der Höhe verstellbaren und über der jeweiligen Teppich-Führungsrolle **500** angeordnete Anpressrolle **510,** wobei in dem in **Fig. 7** gezeigten Beispiel nur eine Anpressrolle **510** aufgrund der Übersichtlichkeit eingezeichnet wurde.

Zumindest eine der Teppich-Führungsrollen **500,** vorzugsweise beide Teppich-Führungsrollen **500,** wird durch den Motor **900** angetrieben, um den herzustellenden Teppich von dem Zuführabschnitt **200** über den Bearbeitungsabschnitt **300** bis zum Aufrollabschnitt **800** zu führen.

Mittels Elektrohubzylinder werden die Anpressrollen **510** auf die jeweiligen Teppich-Führungsrollen **500** abgesenkt, damit durch diesen Anpressvorgang genügend Reibung auf dem dazwischen liegenden Teppich entsteht, sodass mittels Motor **900** und dieser erzeugten Reibung eine solche Zugkraft erzielt wird, dass der Teppich in seinem aufgerollten Zustand auf der zuvor erwähnten Stange optimal durch die Vorrichtung **100** geführt bzw. gezogen werden kann.

Überdies kann durch die auf die Teppich-Führungsrollen **500** anpressenden Anpressrollen **510** eine gegebenenfalls auftretende Wellenbildung des Teppichs minimiert bzw. beseitigt werden, sowie der Teppich möglichst gespannt über die Auflageplatte **400** geführt werden.

Weiters können die Teppich-Führungsrollen **500** sowie die Anpressrollen **510** jeweils in jenem Bereich einen größeren Umfangsabschnitt **520** aufweisen, bei welchem das Klebeband, vorzugsweise doppelseitiges Klebeband, auf den Teppich zugeführt und geklebt wird.

Dadurch wird die absolute Klebefläche des Klebebandes, vorzugsweise doppelseitiges Klebeband, erhöht, da durch das gleichmäßige, punktuelle Anpressen das dehnbare Klebeband in die im Allgemeinen raue Unterseite des Teppichs gedrückt wird, und dadurch die Klebefestigkeit erhöht wird.

Ferner umfasst der Bearbeitungsabschnitt **300** zumindest einen Abstandshalter **620,** vorzugsweise zwei oder mehr Abstandshalter **620,** welche mit einer der Anpressrollen **510** mechanisch gekoppelt sind und durch ein Absenken dieser Anpressrolle **510** abgesenkt werden, wobei zwei Abstandshalter **620** im Bereich der Sensormittel **600** und der Klebeband-Zuführelemente **330** angeordnet sind, wie in **Fig. 1** dargestellt, um den Teppich in gleichbleibenden Höhenabstand zu den jeweiligen Sensormitteln **600** zu halten, damit gewährleistet wird, dass die optischen, lichtsensitiven Sensoren **601, 602** optimal funktionieren.

Hierfür ist zumindest eine parallel zu einer Anpressrolle **510** verlaufende Verstrebung **111** des Tragerahmens **110** im Bereich einer zugeordneten Anpressrolle **510** auf der der Auflageplatte **400** abgewandten Seite bzw. Bereich vorgesehen, wobei die Abstandshalter **620** beispielsweise mittels Scharnieren auf dieser Verstrebung **111** befestigt sind, sodass ein Abschnitt des Abstandhalters **620** auf der der Verstrebung **111** zugeordneten Anpressrolle aufliegt und bei einer Höhenverstellung dieser Anpressrolle **510** die Höhe des Abschnitts des Abstandhalters **620,** welcher eingerichtet ist, um einen gleichbleibenden Höhenabstand zu den jeweiligen Sensormitteln **600** zu gewährleisten, gleichsam verstellt wird.

Wie oben beschrieben, können mit Hilfe der Sensormittel **600** und der beweglichen Klebeband-Zuführelemente **330** variierende Teppichbreiten ausgeglichen werden, um so einen gleichbleibenden Abstand zwischen Teppichkante und aufgeklebtem Klebeband zu gewährleisten. Damit können Breitenunterschiede von einigen Zentimetern, vorzugsweise 4 cm, ausgeglichen werden, wobei dies über die Tiefe der Ausnehmungen der Auflageplatte **400,** in denen die Klebeband-Zuführelemente **330** jeweils angeordnet sind, und über die den jeweiligen Klebeband-Zuführelementen **330** zugeordneten Verschiebeeinheiten **610** modifizier- bzw. einstellbar ist.

Um nun unterschiedliche Teppichbreiten bearbeiten zu können, kann die Auflageplatte **400** in separate Module **400a, 400b, 400c** unterteilt werden. In dem in **Fig. 7** gezeigten Beispiel ist die Auflageplatte **400** in drei Module **400a, 400b, 400c** separiert, wobei die außen gelegenen Module **400a, 400c** je zumindest ein Klebeband-Zuführelement **330** mit einem Sensormittel **600** umfassen.

Eines der außen gelegenen Module **400c** ist fest an dem Tragerahmen **110** fixiert angeordnet, wobei die übrigen Module **400a, 400b** auf dem Tragerahmen **110** in Bezug auf das fixierte Modul **400c** verschiebbar gelagert und in einer gewünschten Position fixierbar sind, und auch wieder gelöst werden können.

Hierbei kann beispielsweise das in **Fig. 7** gezeigte mittlere Zwischenmodul **400b** herausgenommen werden und das verschiebbar gelagerte Modul **400a** bis zu dem an dem Tragerahmen **110** fixierten Modul **400c** geschoben werden. In einer anderen Ausführungsform ist auch ein in der Breite vergrößerter Tragerahmen **110** denkbar, sowie weitere Zwischenmodule, die zwischen den außen gelegenen Modulen **400a, 400c** angeordnet werden können, wenn der gewählte Abstand zwischen den zwei außen gelegenen Modulen **400a, 400c** so groß ist, dass der Teppich dazwischen durchhängt oder sogar durch sein Eigengewicht durchrutscht bzw. durchfällt.

Bei einer Positionsveränderung des außen gelegenen, verschiebbar gelagerten Moduls **400a,** kann auch vorgesehen sein, dass ein dem auf diesen Modul **400a** angeordneten Sensormittel **600** zugeordneter Abstandshalter **620** ebenfalls verschiebbar ausgebildet ist. Es können auch mehrere Abstandshalter **620** fest auf der oben erwähnten Verstrebung angeordnet sein, wobei durch den Abstand der Abstandshalter **620** mögliche zu bearbeitende Teppichbreiten vorgegeben wären.

Ebenso kann bei einer Positionsveränderung des außen gelegenen, verschiebbar gelagerten Moduls **400a** vorgesehen sein, dass der größere Umfangsabschnitt **520** der Teppich-Führungsrollen **500** und/oder Anpressrollen **510** durch an diesen Rollen bewegliche Elemente erzeugt werden, da bei einer Abstandsänderung der Module **400a, 400b, 400c** der Auflageplatte **400** diese Elemente ebenso neu angeordnet werden können.

Um eine gewünschte Teppichlänge mit darauf angeordneten Klebebändern vorzugeben, umfasst der Bearbeitungsabschnitt **300** weiters ein Längenmessgerät **700** mit einem Längenmessrad **710,** welches in einer Ausnehmung in der Auflageplatte **400,** bei einer Ausführungsform mit separaten Modulen **400a, 400b, 400c** vorzugsweise auf dem außen, an dem Tragerahmen **110** fixierten Modul **400c,** angeordnet ist, wobei dem Längenmessrad **710** ein Anpressrad **720** zugeordnet ist, welches den über das Längenmessrad **710** laufenden Teppich in ständigen Kontakt mit dem Längenmessrad **710** hält.

Eine vordefinierte Länge des Teppichs kann über das Längenmessgerät **700** eingestellt werden, wobei das Längenmessrad **710** die Länge des darüber laufenden Teppichs misst. Hierfür sollte der Teppich bzw. die raue Unterseite des Teppichs in ständigem Kontakt mit dem Längenmessrad **710** sein, um eine optimale Funktionsweise sicherzustellen. Um dies zu gewährleisten, ist das Anpressrad **720** über dem Längenmessrad **710** angeordnet und drückt mit seinem Eigengewicht den Teppich auf das Längenmessrad **710.**

Wie bereits für die Abstandshalter **620** beschrieben kann auch das Anpressrad **720** mit einer der Anpressrollen **510** mechanisch gekoppelt sein und durch ein Absenken dieser Absenkrolle **510** ebenfalls abgesenkt wird.

Hierfür ist zumindest eine parallel zu einer Anpressrolle **510** verlaufende Verstrebung **111** des Tragerahmens **110,** vorzugsweise dieselbe, auf welcher die Abstandshalter **620** angeordnet sind, im Bereich einer zugeordneten Anpressrolle **510** auf der der Auflageplatte **400** abgewandten Seite bzw. Bereich vorgesehen, wobei ein Element bzw. Bauteil **721,** auf dem das Anpressrad **720** angeordnet ist, beispielsweise mittels Scharnieren auf dieser Verstrebung **111** befestigt ist, sodass dieses Element bzw. Bauteil **721** des Anpressrads **720** auf der der Verstrebung **111** zugeordneten Anpressrolle **510** aufliegt und bei einer Höhenverstellung dieser Anpressrolle **510** die Höhe des Anpressrads **720** gleichsam verstellt wird.

Nachdem die an dem Längenmessgerät **710** eingestellte Länge erreicht ist, wird die Vorrichtung **100** gestoppt, wobei eine nach der in Teppichzuführrichtung **X** letzten Teppich-Führungsrolle **500** angeordnete Schneidführung **120** vorgesehen ist, um den Teppich in seiner Länge zu beschneiden. Hierfür können unterschiedlichste Schneidwerkzeuge verwendet werden.

Der in Teppichzuführrichtung **X** zuletzt angeordnete Aufrollabschnitt **8** umfasst in dem in **Fig. 7** gezeigten Beispiel zwei Kompaktierungsrollen **810,** wobei der von dem Bearbeitungsabschnitt **300** kommende Teppich durch diese Kompaktierungsrollen **810** wieder aufgerollt wird.

Hierbei ist eine der Kompaktierungsrollen **810** mit einer gummierten Oberfläche ausgestattet, die auf der Teppichoberfläche genügend Reibung erzeugt, sodass der Teppich durch diese Kompaktierungsrolle **810** in einen aufgerollten Zustand geführt wird, wobei der Teppich nicht um diese Kompaktierungsrolle **810,** sondern im Wesentlichen auf bzw. zwischen den Kompaktierungsrollen **810** liegend, aufgerollt wird.

Im Allgemeinen hat der vom Bearbeitungsabschnitt **300** kommende Teppich durch den vor der Bearbeitung aufgerollten Lagerzustand, eine Tendenz in genau diesen aufgerollten Zustand zurückzukehren, und somit eine bevorzugte Aufrollrichtung vorgibt.

Eine weitere Ausführungsform ist in **Fig. 8** schematisch dargestellt. Hierbei wird das Problem der variierenden bzw. unregelmäßigen Teppichbreite dadurch gelöst, dass statt den Sensormitteln **600** Schneidmittel **1000** angeordnet sind, wobei zwei Schneidmittel **1000** in jeweils einer Ausnehmung in der Auflageplatte **400** angeordnet sind, wobei die von den Schneidmitteln **1000** durchgeführten Schnittlinien an dem über die Schneidmittel **1000** geführten Teppich, im Wesentlichen parallel zur Teppichzuführrichtung **X** verlaufen, und wobei durch die Schneidmittel **1000** eine Teppichbahn mit gleichbleibender Breite erzeugt wird.

Statt der Verwendung von Sensormitteln **600** wird also eine gleichbleibende Breite des Teppichs erzeugt, indem Ränder in Längsrichtung des Teppichs bzw. in Teppichzuführrichtung X mittels der Schneidmittel **1000** abgeschnitten und entfernt werden.

Mit der Verwendung von mehr als zwei Schneidmitteln **1000** können auch mehrere Teppichbahnen mit gleichbleibender Breite gleichzeitig erzeugt und bearbeitet werden. Hierzu müssten analog mehr Klebeband-Zuführelemente **330,** welche Klebebänder, vorzugsweise doppelseitige Klebebänder, in Form von durchgehenden Streifen im Wesentlichen parallel an den Längskanten der durch die Schneidmittel erzeugten Teppichbahnen zuführen, sowie Klebebandrollen **310** und Umlenkrollen **320** angeordnet werden.

### BEZUGSZEICHENLISTE

- 10...: Teppich
- 11...: Unterseite des Teppichs
- 12...: Oberseite des Teppichs
- 13...: kompakte Teppichrolle
- 20...: doppelseitige Klebeband
- 21...: Abdeckfolie
- 22...: überstehende Breite der Abdeckfolie
- 30...: Verlegeband
- 100...: Vorrichtung
- 110...: Tragerahmen
- 111...: Verstrebung
- 120...: Schneidführung
- 200...: Zuführabschnitt
- 210...: Halterungselemente
- 300...: Bearbeitungsabschnitt
- 310...: Klebebandrollen
- 320...: Umlenkrollen
- 330...: Klebeband-Zuführelemente
- 340...: Klebeband
- 400...: Auflageplatte
- 400a, 400b, 400c: Module der Auflageplatte
- 500...: Teppich-Führungsrollen
- 510...: Anpressrollen
- 520...: größerer Umfangsabschnitt
- 600...: Sensormittel
- 601...: erster Sensor
- 602...: zweiter Sensor
- 610...: Verschiebeeinheit
- 620...: Abstandshalter
- 700...: Längenmessgerät
- 710...: Längenmessrad
- 720...: Anpressrad
- 721...: Anpressrad zugehöriges Bauteil
- 800...: Aufrollabschnitt
- 810...: Kompaktierungsrollen
- 900...: Motor
- 1000...: Schneidmittel
- 1001...: Ausnehmungen
- 1010...: Schnittlinie
- 2000...: Teppichkante
- X...: Teppichzuführrichtung

## Patentansprüche

1. Verfahren zur Herstellung eines temporär festhaftenden Teppichs zum Auslegen auf einem Gebäudeboden
**gekennzeichnet durch** folgende Schritte:
a) Anordnen von doppelseitigem Klebeband (2) in Form durchgehender Streifen an beiden Längskanten auf der Unterseite (1a) eines vorproduzierten Teppichs (1), wobei die doppelseitigen Klebebänder (2) parallel an den Längskanten des Teppichs (1) angeordnet werden, und wobei auf der dem Teppich (1) abgewandten Seite des doppelseitigen Klebebandes (2) eine zumindest in die Länge dehnbare, abziehbare Abdeckfolie (2a) angeordnet ist, welche eine größere Breite als das doppelseitige Klebeband (2) aufweist, wobei die überstehende Breite (2a') der Abdeckfolie (2a) in Richtung der jeweiligen Längskante des Teppichs (1) vorsteht, und wobei das doppelseitige Klebeband (2) auf einer Seite eine von der anderen Seite unterschiedliche Klebekraft aufweist, wobei die stärker klebende Seite auf die Unterseite (1a) des Teppichs (1) geklebt wird,
b) Schneiden des Teppichs (1) in eine vorgegebene Länge, und
c) Aufrollen des Teppichs (1) zu einer kompakten Rolle (1') mit der Unterseite (1a) nach außen, wobei der Teppich (1) ohne ein Ablösen des doppelseitigen Klebebands (2) oder der Abdeckfolie (2a) zusammengerollt wird.

2. Verfahren nach einem Anspruch 1, **dadurch gekennzeichnet, dass** das doppelseitige Klebeband (2) auf dem jeweils beklebten Boden im Wesentlichen rückstandsfrei entfernbar ist.

3. Verfahren nach einem der Ansprüche 1 oder 2, **dadurch gekennzeichnet, dass** das doppelseitige Klebeband (2) auf der beklebten Unterseite (1a) des Teppichs (1) im Wesentlichen rückstandsfrei entfernbar ist.

4. Verfahren nach einem der Ansprüche 1 bis 3, **dadurch gekennzeichnet, dass** die Abdeckfolie (2a) elastisch dehnbar ausgebildet ist.

5. Verfahren nach einem der Ansprüche 1 bis 4, **dadurch gekennzeichnet, dass** die Abdeckfolie (2a) aus der Gruppe der Polyolefine, insbesondere Polypropylen, gewählt ist.

6. Verfahren zum Auslegen eines nach Anspruch 1 bis 5 hergestellten Teppichs, **gekennzeichnet durch** folgende Schritte:
a) Fixieren eines ersten Endes des Teppichs (1) an einem Gebäudeboden mit Hilfe eines Verlegebandes (3),
b) Aufbringen einer Zugkraft an dem nicht fixierten Ende des Teppichs und dessen Spannen über seine Länge,
c) Fixieren des zweiten Endes des Teppichs an dem Boden mit Hilfe des Verlegebandes (3),
d) Ergreifen der überstehenden Breite (2a') der Abdeckfolie (2a) und Abziehen der Abdeckfolie (2a) zwischen Boden und Unterseite (1a) des Teppichs (1),
e) temporäres Verhaften der Teppichbereiche an dem die doppelseitigen Klebebänder (2a) an der Unterseite (1a) des Teppichs (1) angeordnet sind durch Anpressen an den Boden.
